# EUROPÄISCHE PATENTSCHRIFT

(11) **EP 3 622 213 B1**
(45) Veröffentlichungstag und Bekanntmachung des Hinweises auf die Patenterteilung: **08.09.2021**
(21) Anmeldenummer: 18731956.1
(22) Anmeldetag: 02.05.2018
(51) Int. Cl.: F16M 11/10, F16M 11/20, F16M 11/38, F16M 13/00

(54) **VERSTELLBARE HALTERUNG FÜR MOBILE KOMMUNIKATIONSGERÄTE UND MOBILES KOMMUNIKATIONSGERÄT MIT VERSTELLBARER HALTERUNG**
ADJUSTABLE MOUNTING FOR MOBILE COMMUNICATION DEVICES AND MOBILE COMMUNICATION DEVICE WITH ADJUSTABLE MOUNTING
SUPPORT RÉGLABLE POUR APPAREILS DE COMMUNICATION MOBILES ET APPAREIL DE COMMUNICATION MOBILE À SUPPORT RÉGLABLE

(30) Priorität: 02.05.2017 DE 202017102562 U
(43) Veröffentlichungstag der Anmeldung: 18.03.2020
(73) Patentinhaber: Ollendorf, Hans-Joachim, 39517 Brunkau (DE)
(72) Erfinder: Ollendorf, Hans-Joachim, 39517 Brunkau (DE)
(74) Vertreter: Patentanwälte Schuster, Müller & Partner mbB
(86) Internationale Anmeldenummer: PCT/DE2018/100416
(87) Internationale Veröffentlichungsnummer: WO 2018/202250

(56) Entgegenhaltungen:
- US-A1- 2013 256 492
- US-S- D 656 500

## Beschreibung

### Stand der Technik

Die Erfindung geht aus von einer Halterung für mobile Kommunikationsgeräte mit optischem Sensor, beispielsweise für Smartphones, Tablet-PC's u. ä., die somit auch als elektronische Lupe, insbesondere als vergrößernde Schreib- und Lesehilfe, verwendbar sind, nach der Gattung des Oberbegriffs des Patentanspruchs 1 sowie einem mobilen Kommunikationsgerät mit optischer Lupenfunktion nach der Gattung des Oberbegriffs des Patentanspruchs 6.

Bekannt ist eine Halterung für ein Mobiltelefon oder andere Telefone, die oberhalb einer Arbeitsfläche gehaltert sind. Die Halterung umfasst eine Aufnahme für das Telefon, die an dem oberen Ende eines Konnektors schwenkbar befestigt ist. Der Konnektor ist mit seinem unteren Ende mit einer Grundplatte schwenkbar verbunden. Dadurch kann das Mobiltelefon mit Abstand zu der Arbeitsfläche in beliebigen Winkeln positioniert und auch oberhalb der Grundplatte in der Waagerechten abgelegt werden (US 2009/0221333 A1). US2013256492 offenbart eine Halterung nach dem Obergriff des Anspruchs 1.

Der Nachteil dieser Halterungen besteht darin, dass die Anordnung des die Aufnahme für das Telefon mit der Grundplatte verbindenden Konnektors keine Verschiebung einer Lese- oder Schreibvorlage in Längsrichtung der Halterung zulässt. Somit ist diese Halterung nur begrenzt für solche mobilen Kommunikationsgeräte geeignet, die als elektronische Lupe, insbesondere als vergrößernde Schreib- und Lesehilfe, angewendet werden. Außerdem lässt sich der Konnektor lediglich in einem Winkel von 0 bis ca. 120° schwenken, so dass er zum Zusammenlegen der Halterung lediglich in die Ebene der Grundplatte auf die Arbeitsfläche geschwenkt werden kann, um die Aufnahme mit dem Mobiltelefon in die Waagrechte schwenken zu können. Dadurch ist die Halterung im zusammengeklappten Zustand verhältnismäßig lang.

Bekannt ist ferner eine Halterung für mobile Kommunikationsgeräte mit optischem Sensor, die als elektronische Lupe, insbesondere als vergrößernde Schreib- und Lesehilfe, angewendet werden. Sie besteht aus einer auf einer Arbeitsfläche positionierbaren Grundplatte, einem oberhalb dieser angeordneten Aufnahmeteil für das Kommunikationsgerät und einem das Aufnahmeteil und die Grundplatte in variablem Abstand und/oder Winkel zueinander haltenden Abstandsteil, wobei das Abstandsteil jeweils im Bereich der übereinander parallel zueinander verlaufenden Außenkanten von Grundplatte und Aufnahmeteil schwenkbar mit der Grundplatte und dem Aufnahmeteil verbunden ist. Das Abstandsteil besteht aus zwei Stützen, die im Bereich der übereinander parallel zueinander verlaufenden Außenkanten jeweils von außen an die rechtwinklig zu diesen Außenkanten verlaufenden Stirnseiten von Grundplatte und Aufnahmeteil schwenkbar angelenkt sind. Die Länge der Stützen ist so gewählt, dass bei ihrer senkrechten Stellung die lichte Weite zwischen Grundplatte und Aufnahmeteil im Bereich der Schwenkachsen größer ist als die sich rechtwinklig von der Schwenkachse des Aufnahmeteils über Alles erstreckende Abmessung des Aufnahmeteils. (DE 20 2015 003 430 U1).

Der Nachteil dieser Halterung besteht darin, dass sie nur bei jenen mobilen Kommunikationsgeräten eine optimale Erfassung des gesamten Lese- und/oder Schreibbereiches zulässt, die eine auf ihrer Gerätelängsseite mittig angeordnete Kamera aufweisen. Bei Kommunikationsgeräten bei denen die Kamera seitlich angeordnet ist, kann das zu vergrößernde Motiv nicht vom gesamten Lese- und/oder Schreibbereich in den Kamerablickbereich platziert werden, da funktionsbedingt eine der Stützen im Kamerablickbereich platziert ist, so dass eine seitliche Verschiebung des zu vergrö-βernden Motivs in den Kamerablickbereich nicht möglich ist, sofern sich das Motiv nicht gerade im oberen Randbereich der Seite befindet. Eine Längsverschiebung der Seite ist, ähnlich wie bei der vorgenannten Veröffentlichung US 2009/0221333 A1 beschrieben, nicht möglich. Damit ist eine Vielzahl im Vergrößerungsbereich hochleistungsfähiger Geräte mit der o.g. Halterung als vergrößernde Schreib- und Lesehilfe nicht optimal verwendbar.

Der Erfindung liegt daher die Aufgabe zugrunde, die bekannten Halterungen für mobile Kommunikationsgeräte derart zu verändern, dass sie auch bei der Aufnahme von mobilen Kommunikationsgeräten mit seitlicher Anordnung des optischen Sensors eine optimale Erfassung des gesamten Lese- und/oder Schreibbereiches zulässt.

### Die Erfindung und ihre Vorteile

Die Aufgabe wird gemäß der kennzeichnenden Merkmale der Patentansprüche 1 oder 6 dadurch gelöst, dass das die Grundplatte und das Aufnahmeteil für das Kommunikationsgerät gelenkig miteinander verbindende Abstandsteil einseitig auf der dem optischen Sensor des Kommunikationsgerätes gegenüberliegenden Seite angeordnet ist. Ausgehend von der dem optischen Sensor des Kommunikationsgerätes gegenüberliegenden Seitenkante des Aufnahmeteils für das Kommunikationsgerät sowie der sich unterhalb dieser Seitenkante befindlichen Seitenkante der Grundplatte erstreckt es sich in Richtung der Mitte von Aufnahmeteil und Grundplatte. Die Breite des Aufnahmeteils ist so gewählt, dass bei eingelegtem Kommunikationsgerät dessen optischer Sensor freiliegend ist. Das Abstandsteil ist jeweils an eine der parallel zueinander verlaufenden Längskanten von Grundplatte und Aufnahmeteil schwenkbar angelenkt. Die Länge des Abstandsteils ist so ausgelegt, dass der lichte Abstand der Scharniere etwas größer ist als die die Vorder- und Hinterkante verbindende Seitenkante des Aufnahmeteils für das Kommunikationsgerät. Dadurch ist es möglich, das Aufnahmeteil samt dem Kommunikationsgerät zwischen die Scharniere des Abstandsteils einzuschwenken, wodurch beim Zusammenklappen der Halterung das Abstandsteil und das Aufnahmeteil mit dem Kommunikationsgerät parallel übereinander und auch parallel über der Grundplatte zu liegen kommen, so dass die Gesamtanordnung im zusammengeklappten Zustand sehr flach ausgeführt ist und sich daher gut transportieren lässt. Die Begriffe Vorder-, Hinter- und Seitenkante sind aus der Blickposition des Bedieners des Kommunikationsgeräts heraus zu verstehen.

Die Ausführung der unteren Hauptdrehachse im Bereich des unteren Gelenks ist in der Null-Lage (unausgeschwenkt) magnetisch eingerastet und beispielsweise bei einer Auslenkung des Abstandsteils von 40° oder 80° zur Waagerechten mit einer leicht per Knopfdruck zu bedienenden Drehmomentenlagerung, beispielsweise einer Rasterung versehen. Ebenso ist die Ausführung der oberen Hauptdrehachse im Bereich des oberen Gelenks in der Null-Lage eingerastet und beispielsweise bei 30° zur Waagerechten des Aufnahmeteiles mit einer per Knopfdruck leicht zu bedienenden Drehmomentenlagerung, beispielsweise einer Rasterung versehen. Im Bereich von etwa 90° zur Waagerechten kommt ein in das obere Gelenk integriertes Drehmomentlager zur Wirkung, das eine stufenlose Einstellung der senkrechten Displaystellung zur Ausrichtung eines Spektivfernrohres auf bestimmte Objekte, beispielsweise auf eine Schultafel ermöglicht.

Besonders vorteilhaft ist die Arbeitsposition der erfindungsgemäßen Halterung als Stativ mit Livebildvergrößerung:
- besonders vorteilhaft im Objektabstand etwa 18 cm ist, dass unter dem vergrößernden Bildschirm des Kommunikationsgeräts bequem geschrieben werden kann;
- optimierte Platzverhältnisse, zum Beispiel ist die Betrachtung von Objekten größer als A4-Seiten möglich, da erfindungsgemäß nur noch ein einseitig angeordnetes Abstandsteil vorhanden ist.

Besonders vorteilhaft ist die Arbeitsposition der erfindungsgemäßen Halterung als Bildschirmlesegerät mit senkrechtem Display:
- vergrößerter Objektabstand erbringt vergrößerte Objektfläche;
- optimierte Platzverhältnisse, zum Beispiel ist die Betrachtung von Objekten größer als A4-Seiten möglich, da erfindungsgemäß nur noch das einseitig angeordnete Abstandsteil vorhanden ist;
- einige Sehbehinderungen erfordern ein sehr nahes Heranrücken an die zu betrachtende Darstellung auf dem Display, dies ist ergonomisch nur bei einem senkrechten Bildschirm möglich, insbesondere für Kinder und Schüler;

In einer besonders vorteilhaften Ausgestaltung der Erfindung besteht das Abstandsteil aus einer Doppelstütze, die aus zwei einzelnen, in Richtung der Breite der Grundplatte bzw. des Aufnahmeteils beabstandeten und über an ihren freien Enden befindliche Lager verbundenen Stützen gebildet ist. Dadurch reduziert sich das Gewicht der Halterung. Zur Erhöhung der Stabilität der Doppelstütze können die beiden Stützen zusätzlich über ein flächiges Fachwerk oder eine dünne Platte miteinander verbunden sein.

Besonders vorteilhaft ist die Arbeitsposition der erfindungsgemäßen Halterung als Bildschirmlesegerät mit senkrechtem Display und Spektiv-Fernrohr als Schultafelsichtgerät:
- optischer Zoom des Spektivfernrohres bringt die Möglichkeit der Anwendung auch bei entfernten Objekten wie Schultafeln oder Leinwandpräsentationen in vergrößernder Darstellung und/oder beispielsweise Kontrastfarbdarstellungen;
- optischer Zoom des Spektivfernrohres bringt die Möglichkeit der Anwendung von Schrifterkennungssoftware auch bei entfernten Objekten wie Schultafeln oder Leinwandpräsentationen;
- die Nutzung der Kamera in großer Höhe relativ zur Aufstellungsfläche bringt die Möglichkeit, "über die Schulter hinweg" der weiter vorn sitzenden Schüler das Geschehen auf der Tafel oder der Präsentation vergrößert zu verfolgen.

Eine zusätzliche vorteilhafte Nutzung der erfindungsgemäßen Halterung besteht in der Nutzung als elektronisches Arbeitsmittel, d. h. als Pultgerät.

Eine anderweitige vorteilhafte Nutzung der erfindungsgemäßen Halterung besteht in der Nutzung als mobile elektronische Sehhilfe.

Die Verwendung der im Kommunikationsgerät integrierten Kamera ohne zusätzliche Vorsatzlupe erbringt die Möglichkeit der Nutzung der Schärfentiefe von 5 cm bis unendlich und damit eine von vergrößernden Sehhilfen mit Bildschirmgrößen größer 12 Zoll bisher nicht erreichte Nutzungsmobilität durch erfindungsgemäße Herausnahme des Kommunikationsgeräts aus dem Schutz- und Haltecover.

Besonders vorteilhaft gestaltet sich auch die Transportposition der erfindungsgemäßen Halterung:
Eine nahezu unbegrenzte Mobilität des Anwenders wird dadurch erreicht, dass
- die Halterung bis auf eine Bauhöhe von 24 mm zusammengefaltet werden kann;
- die Kommunikationsgeräte-Technik umfassend und beidseitig beispielhaft durch ein handelsübliches Schutz- und Haltecover geschützt ist.

Weitere Vorteile und vorteilhafte Ausgestaltungen der Erfindung sind der nachfolgenden Beschreibung, den Ansprüchen und den Zeichnungen entnehmbar.

### Zeichnung

Bevorzugte Ausführungsbeispiele des erfindungsgemäßen Gegenstands sind in der Zeichnung dargestellt und werden im Folgenden näher erläutert. Es zeigen
- Fig. 1: eine perspektivische Ansicht der erfindungsgemäßen Halterung mit mobilem Kommunikationsgerät in der Arbeitssituation einer elektronischen Leselupe,
- Fig. 2: eine Frontansicht der Halterung zu Fig. 1,
- Fig. 3: eine perspektivische Ansicht der erfindungsgemäßen Halterung mit mobilem Kommunikationsgerät in der Arbeitssituation der Verwendung als elektronisches Arbeitsmittel,
- Fig. 4: eine perspektivische Ansicht der erfindungsgemäßen Halterung mit mobilem Kommunikationsgerät in Transportsituation mit einer handelsüblichen magnetischen Display-Schutzabdeckung,
- Fig. 5: eine perspektivische Ansicht der erfindungsgemäßen Halterung mit mobilem Kommunikationsgerät in der Arbeitssituation Verwendung als Bildschirmlesegerät mit senkrecht stehendem Display und
- Fig. 6: eine perspektivische Ansicht der erfindungsgemäßen Halterung mit mobilem Kommunikationsgerät in der Arbeitssituation Verwendung als Bildschirmlesegerät mit senkrecht stehendem Display und Spektiv-Fernrohr als Schultafelkamera.

### Beschreibung der Ausführungsbeispiele

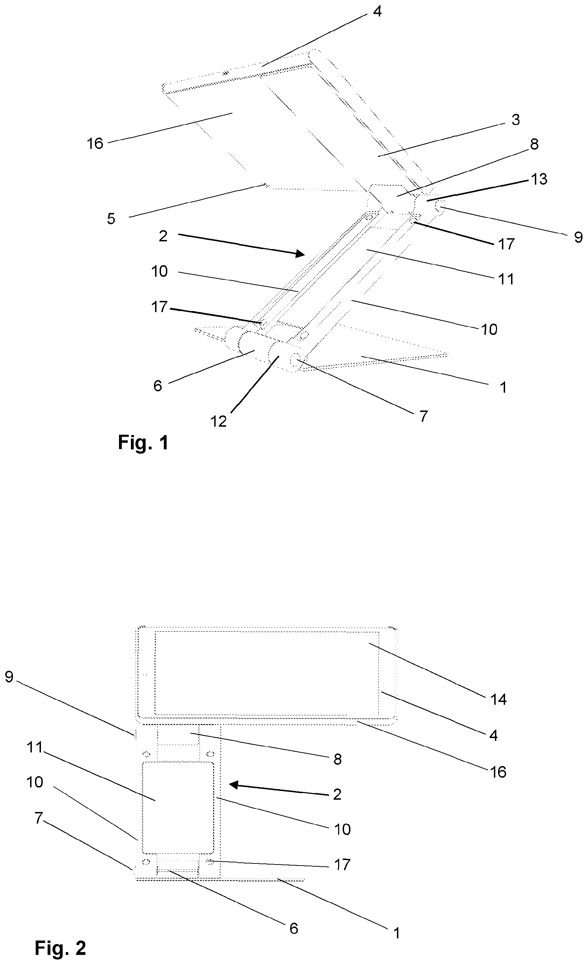

Die in **Fig. 1** dargestellte perspektivische Ansicht zeigt einen Blick seitlich von hinten auf eine erfindungsgemäße Halterung mit einem mobilen Kommunikationsgerät in der Arbeitssituation einer elektronischen Leselupe. Wie aus **Fig. 1** erkennbar, besteht die erfindungsgemäße Halterung für das Kommunikationsgerät aus einer Grundplatte 1, einem schwenkbar an deren hinteren Längskante angeordnetem Abstandsteil 2 und einem mit dem anderen Ende des Abstandsteils 2 ebenfalls schwenkbar verbundenen Aufnahmeteil 3 für das mobile Kommunikationsgerät, das im vorliegenden Beispiel ein Tablet-PC 4 ist mit einem auf seiner Rückseite in der vom Bediener aus gesehen rechten unteren Ecke angeordneten Kameraobjektiv 5. Dieses ist ausgerichtet auf die Aufstellfläche der Halterung, beispielsweise eine Tischfläche, auf der sich das vergrößert darzustellende Objekt, beispielsweise eine Zeitschrift, befinden kann.

Das Aufnahmeteil 3, das mit an sich bekannten Mitteln zur lösbaren Aufnahme und Arretierung unterschiedlicher Kommunikationsgeräte ausgerüstet ist, ist mit seiner Vorderkante schwenkbar mit dem Abstandsteil 2 verbunden. Die erfindungsgemäße Besonderheit der Verbindung dieser drei Haupteile besteht darin, dass das Abstandsteil 2 die Grundplatte 1 mit dem Aufnahmeteil 3 unsymmetrisch, also nur auf einer Seite verbindet, d. h. das Abstandsteil 2 erstreckt sich von einer der Seitenkanten von Grundplatte 1 und Aufnahmeteil 3, im vorliegenden Beispiel von der vom Bediener aus gesehen linken Seite, in Richtung der Mitte der Grundplatte 1. Das Aufnahmeteil 3 weist im vorliegenden Beispiel etwa die gleiche Breite auf wie das Abstandsteil 2, so dass der Tablet-PC 4 mit mehr als der Hälfte seiner Breite das Aufnahmeteil 3 überragt. Dadurch liegt das nahe der rechten Kante des Tablet-PC's 4 befindliche Kameraobjektiv 5 frei zur Motiverfassung.

Zur schwenkbaren Verbindung des Abstandsteils 2 mit der Grundplatte 1 weist Letztere an ihrer dem Betrachter der Fig. 1 zugewandten, hinteren Längskante ein unteres Scharnierlager 6 auf. In der Schwenkachse des unteren Scharnierlagers 6 ist stirnseitig ein unterer Rastbedienknopf 7 angeordnet (Fig. 2). Zur schwenkbaren Verbindung des Abstandsteils 2 mit dem Aufnahmeteil 3 weist Letzteres an seiner dem Betrachter abgewandten, vorderen Längskante ein oberes Scharnierlager 8 auf. In der Schwenkachse des oberen Scharnierlagers 8 ist stirnseitig ein oberer Rastbedienknopf 9 angeordnet (Fig. 2).

Im vorliegenden Beispiel besteht das Abstandsteil 2 aus zwei in Richtung der Breite der Grundplatte 1 beabstandeten Stützen 10, die zur Stabilisierung und Schwingungsdämpfung der Gesamtkonstruktion über eine Stabilisierungsplatte 11 miteinander verbunden sind. Die Stützen 10 weisen an ihren unteren Enden jeweils eine untere Lagerbuchse 12 auf, mit der sie in der unteren Schwenkachse mit dem unteren Scharnierlager 6 der Grundplatte 1 schwenkbar verbunden sind. Die Einstellung der Winkelposition der Stützen 10 gegenüber der Grundplatte 1 erfolgt durch den im Bereich der unteren Schwenkachse angeordneten Rastbedienknopf 7. Die gegenüberliegenden Enden der Stützen 10 sind jeweils mit einer oberen Lagerbuchse 13 versehen, die mit dem oberen Scharnierlager 8 des Aufnahmeteils 3 drehbar verbunden sind. Eine durch den im Bereich der oberen Schwenkachse angeordneten Rastbedienknopf 9 betätigbare Rasterung erlaubt die Arretierung verschiedener Auslenkungen des Aufnahmeteils 3 und damit des Tablet-PC's 4.

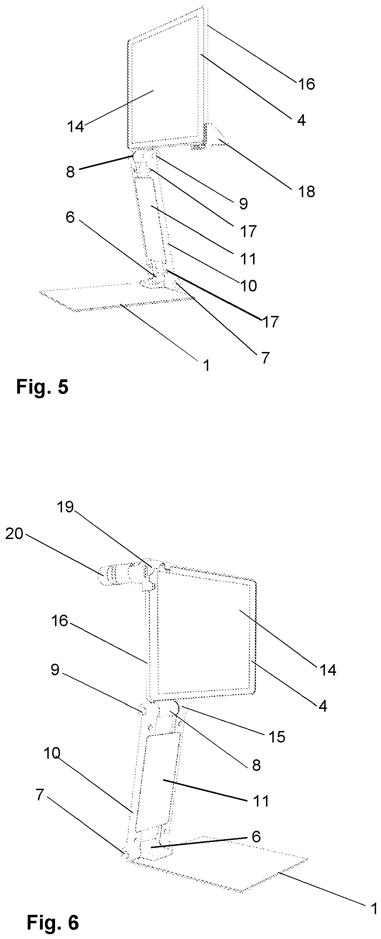

Eine zweite Rasterungskombination des Aufnahmeteils 3 zur Waagerechten ermöglicht eine stufenlose Ausrichtung des Displays 14 des Tablet-PC's 4 im Bereich 85° bis 95° zur Waagerechten durch die Wirkung eines Drehmomentlagers 15, das in dem oberen Scharnierlager 8 eingebaut ist (Fig. 6).

An dem Aufnahmeteil 3 ist im vorliegenden Beispiel durch Verschraubung oder dauerhafte Verklebung ein handelsübliches Tablet-PC Schutz- und Haltecover 16 befestigt, das der dauerhaften, dennoch wieder abnehmbaren und schützenden Aufnahme des Tablet-PC's 4 dient.

**Fig. 2** zeigt eine Frontansicht der in Fig. 1 dargestellten erfindungsgemäßen Halterung mit Tablet-PC 4 aus der Sicht des Bedieners. Aus dieser Darstellung sind zusätzlich zwei jeweils in einer Stütze 10, also insgesamt vier Magnete 17 erkennbar, die in der zusammengeklappten Ruheposition den Halt der Stützen 10 auf der Grundplatte 1 sichern.

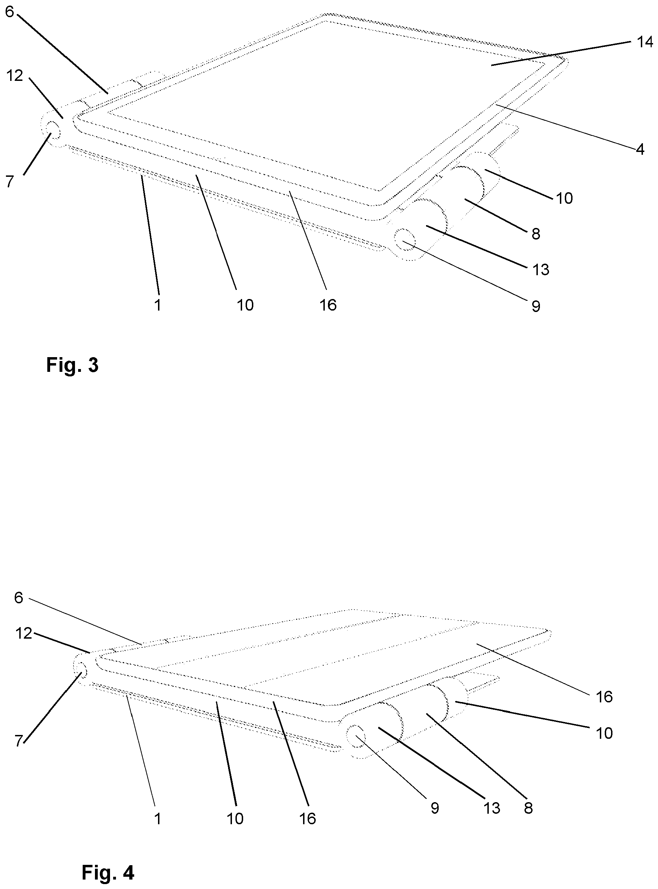

**Fig. 3** stellt die erfindungsgemäße Halterung mit Tablet-PC 4 im zusammengeklappten Zustand als eine der möglichen Pultpositionen für die Nutzung als flaches elektronisches Arbeitsmittel dar.

**Fig. 4** stellt die erfindungsgemäße Halterung im zusammengeklappten Zustand als Transportposition dar, wobei hier der Tablet-PC 4 zum Schutz durch das handelsübliche magnetisch gehaltene Tablet-PC Schutz- und Haltecover 16 abgedeckt ist.

**Fig. 5** stellt die erfindungsgemäße Halterung mit Tablet-PC 4 in einer Arbeitsposition als Bildschirmlesegerät mit senkrecht stehender Displayfläche 14 dar. Hierbei stehen die Stützen 10 in einer Rastposition von beispielsweise 80° zur Waagerechten, und die Rastposition des Aufnahmeteils 3 mit Tablet-PC 4 und Tablet-PC Schutz- und Haltecover 16 beträgt beispielsweise 90° zur Waagerechten. Hierzu ist es erforderlich, das Kamerablickfeld in Richtung der Aufstellfläche der Halterung, beispielsweise einer Tischfläche, auf der sich das vergrößert darzustellende Objekt, beispielsweise eine Zeitschrift, befinden kann, zu richten. Deshalb ist vor dem Kameraobjektiv 5 des Tablet-PC's 4, das sich auf seiner Rückseite an der vom Bediener aus gesehen rechten unteren Ecke befindet, ein Umlenkspiegel 18 am Gehäuse des Tablet-PC's 4 als eine Vorsatzoptik angeordnet. Die Spiegelung wird durch eine entsprechende Auslegung der darstellenden Software eliminiert. Zu Nutzungsbeginn bzw. zu Nutzungsende ist der Umlenkspiegel 18 am Gehäuse des Tablet-PC's 4 leicht anklickbar bzw. leicht abnehmbar durch eine magnetische Halterung und magnetische Zentrierung.

**Fig. 6** stellt die erfindungsgemäße Halterung mit Tablet-PC 4 in der gleichen Arbeitsposition als Bildschirmlesegerät mit senkrecht stehender Displayfläche 14 wie in Fig. 5 dar. Allerdings ist hierbei der Tablet-PC 4 um 180° entweder in dem oder mit dem Tablet-PC Schutz- und Haltecover 16 derart gedreht, dass sich das Kameraobjektiv 5 des Tablet-PC's 4 an der vom Bediener aus gesehen linken oberen Ecke befindet. An dieser Ecke ist eine Spektivhalterung 19 mit einer leichten Klemmung angeordnet. Ihre Zentrierung auf das Kameraobjektiv 5 erfolgt durch eine hier nicht näher dargestellte Magnetenkombination innerhalb der Spektivhalterung 19 und dem Tablet-PC Schutz- und Haltecover 16. Zentrisch in die Spektivhalterung 19 ist ein Spektiv 20 als vergrößerndes Fernrohr mit beispielsweise einem Faktor 8 oder 10 eingesetzt, so dass es damit ebenfalls auf das Kameraobjektiv 5 zentriert ist. In dem Fall dient diese Arbeitsposition der Halterung des Tablet-PC's 4 nicht der Vergrößerung einer auf dem Arbeitstisch befindlichen Lese- oder Schreibvorlage, sondern zum Heranholen und zur Anzeige auf dem Display 14 eines vom Arbeitsplatz weiter entfernten Objektes oder Motives, beispielsweise eines Tafel- oder Projektionsbildes.

In der Rasterposition 90° zur Waagerechten des Aufnahmeteils 3 und damit des Displays 14 des Tablet-PC's 4 ist das Kameraobjektiv 5 waagerecht ausgerichtet. Diese Rasterungsposition erlaubt eine zusätzliche stufenlose Ausrichtung des Displays 14 und damit des Kameraobjektivs 5 um jeweils beispielsweise 5° mehr oder weniger abweichend von der Senkrechten des Displays 14 bzw. von der Waagerechen des Kameraobjektivs 5. In diesem Falle kommt die Wirkung des Drehmomentlagers 15 zur stufenlosen Einstellmöglichkeit zum Tragen.

Zu Nutzungsbeginn bzw. zu Nutzungsende ist die Spektivhalterung 19 mitsamt dem Spektiv 20 leicht anklickbar bzw. leicht abnehmbar durch leichte Klemmung und magnetischer Zentrierung.

Alle hier dargestellten Merkmale können sowohl einzeln als auch in beliebiger Kombination miteinander erfindungswesentlich sein.

### Bezugszahlenliste

- 1: Grundplatte
- 2: Abstandsteil
- 3: Aufnahmeteil
- 4: Tablet-PC
- 5: Kameraobjektiv
- 6: Unteres Scharnierlager
- 7: Unterer Rastbedienknopf
- 8: Oberes Scharnierlager
- 9: Oberer Rastbedienknopf
- 10: Stützen
- 11: Stabilisierungsplatte
- 12: untere Lagerbuchse
- 13: obere Lagerbuchse
- 14: Display des Tablet-PC's
- 15: Drehmomentenlager
- 16: Tablet-PC Schutz- und Haltecover
- 17: Magnet
- 18: Umlenkspiegel
- 19: Spektivhalterung
- 20: Spektiv

## Patentansprüche

1. Verstellbare Halterung für mobile Kommunikationsgeräte mit optischem Sensor, bestehend aus
- einer auf einer Arbeitsfläche positionierbaren Grundplatte (1), die eine Vorderkante, eine Hinterkante sowie zwei diese verbindenden Seitenkanten aufweist,
- einem oberhalb der Grundplatte (1) angeordneten Aufnahmeteil (3) für das Kommunikationsgerät (4), wobei das Aufnahmeteil (3) mindestens eine parallel zu der Vorder- und/oder Hinterkante der Grundplatte (1) verlaufende Vorder- und/oder Hinterkante sowie zwei diese Vorder- und Hinterkante verbindende Seitenkanten aufweist, und
- einem das Aufnahmeteil (3) und die Grundplatte (1) in variablem Abstand und/oder Winkel zueinander haltenden Abstandsteil (2), das jeweils an einer der parallel zueinander verlaufenden Vorder- oder Hinterkante von Grundplatte (1) und Aufnahmeteil (3) schwenkbar mit der Grundplatte (1) und dem Aufnahmeteil (3) verbundenen ist, wobei
die Länge des Abstandsteils (2) so gewählt ist, dass die lichte Weite des Zwischenraums zwischen dessen Lagerstellen (6, 8) zur schwenkbaren Verbindung mit der Grundplatte (1) und dem Aufnahmeteil (3) etwas größer ist als die Länge der die Vorder- und Hinterkante verbindende Seitenkante des Aufnahmeteils (3),
**dadurch gekennzeichnet**,
- dass das Abstandsteil (2), ausgehend von einer der Seitenkanten des Aufnahmeteils (3) sowie der unterhalb dieser liegenden Seitenkante der Grundplatte (1) einseitig asymmetrisch, sich in Richtung der Mitte von Aufnahmeteil (3) und Grundplatte (1) hin erstreckend angeordnet ist.

2. Verstellbare Halterung nach Anspruch 1,
**dadurch gekennzeichnet,**
**dass** das Abstandsteil (2) aus zwei Stützen (10) besteht, die in Richtung der Breite der Grundplatte (1) sowie des Aufnahmeteils (3) zueinander beabstandet sind.

3. Verstellbare Halterung nach Anspruch 2,
**dadurch gekennzeichnet,**
**dass** die beiden Stützen (10) über stabilisierende Mittel (11) miteinander verbunden sind.

4. Verstellbare Halterung nach Anspruch 1, 2 oder 3,
**dadurch gekennzeichnet,**
**dass** das Abstandsteil (2) mit der Hinterkante der Grundplatte (1) und der Vorderkante des Aufnahmeteils (3) gelenkig verbunden ist.

5. Verstellbare Halterung nach einem der Ansprüche 1 bis 4,
**dadurch gekennzeichnet,**
**dass** die Grundplatte (1) ein unteres Scharnierlager (6) aufweist, das aus der Ebene der Grundplatte (1) nach oben herausragt und das Aufnahmeteil (3) ein oberes Scharnierlager (8) aufweist, das aus der Ebene des Aufnahmeteils (3) nach unten herausragt.

6. Mobiles Kommunikationsgerät mit einer verstellbaren Halterung, das an einer Seite einen optischen Sensor für eine optische Lupenfunktion aufweist und dessen Halterung ein Aufnahmeteil (3) für das Kommunikationsgerät und ein Abstandsteil (2) aufweist, so dass das Aufnahmeteil (3) in seinem Abstand und/oder Winkel zu einer horizontalen Arbeitsfläche positionierbar ist, wobei das Abstandsteil (2) mit seinem einen Ende schwenkbar mit der Vorder- oder Hinterkante des Aufnahmeteils (3) und mit seinem anderen Ende schwenkbar mit der parallel zur der Vorder- oder Hinterkante des Aufnahmeteils (3) verlaufenden Vorder- oder Hinterkante einer Grundplatte (1) verbunden ist, wobei die Länge des Abstandsteils (2) so gewählt ist, dass die lichte Weite des Zwischenraums zwischen dessen Lagerstellen (6, 8) zur schwenkbaren Verbindung mit der Grundplatte (1) und dem Aufnahmeteil (3) etwas größer ist als die Länge der die Vorder- und Hinterkante verbindende Seitenkante des Aufnahmeteils (3),
**dadurch gekennzeichnet,**
**dass** das Abstandsteil (2), ausgehend von der dem optischen Sensor (5) des Kommunikationsgerätes (4) gegenüberliegenden Seitenkante des Aufnahmeteils (3) sowie der unterhalb dieser liegenden Seitenkante der Grundplatte (1) einseitig asymmetrisch, sich in Richtung der Mitte von Aufnahmeteil (3) und Grundplatte (1) hin erstreckend angeordnet ist.

7. Mobiles Kommunikationsgerät nach Anspruch 6,
**dadurch gekennzeichnet,**
**dass** in dem Bereich des optischen Sensors (5) des mobilen Kommunikationsgeräts (4) ein Umlenkspiegel (18) an dem Gehäuse des mobilen Kommunikationsgeräts (4) angeordnet ist.

8. Mobiles Kommunikationsgerät nach Anspruch 6,
**dadurch gekennzeichnet,**
**dass** in dem Bereich des optischen Sensors (5) des mobilen Kommunikationsgeräts (4) eine Spektivhalterung (19) für ein Spektiv (20) an dem Gehäuse des mobilen Kommunikationsgeräts (4) angeordnet ist.

## Claims

1. Adjustable mounting for mobile communication devices having an optical sensor, comprising
- a base (1), positionable on a work surface, having a front edge, a rear edge and two side edges connecting these front and rear edges,
- a receiving part (3) arranged over the base (1) for the communication device (4), wherein the receiving part (3) has at least one front and/or rear edge running parallel to the front and/or rear edge of the base (1) and two side edges connecting these front and rear edges, and
- a spacer part (2) which holds the receiving part (3) and the base (1) at a variable distance from and/or angle to one another, which is pivotably connected to the base (1) and to the receiving part (3) at one of the mutually parallel front edge or rear edge of both the base (1) and the receiving part (3), wherein
the length of the spacer piece (2) is chosen such that the clear width of the space between the support points (6, 8) thereof for the pivotable connection to the base (1) and to the receiving part (3) is somewhat greater than the length of the side edge of the receiving part (3) connecting the front and rear edges thereof,
**characterised in that**,
- the spacer part (2), starting asymmetrically to one side from one of the side edges of the receiving part (3) and from the side edge of the base (1) located beneath it, is arranged to extend in the direction of the middle of the receiving part (3) and the base (1).

2. Adjustable mounting in accordance with Claim 1,
**characterised in that**,
the spacer part (2) comprises two supports (10) spaced apart from one another in the direction of the width of the base (1) and the receiving part (3).

3. Adjustable mounting in accordance with Claim 2,
**characterised in that**,
the two supports (10) are connected by a stabilising means (11).

4. An adjustable mounting in accordance with Claim 1, 2 or 3,
**characterised in that**,
the spacer part (2) is articulated with the rear edge of the base (1) and the front edge of the receiving part (3).

5. Adjustable mounting in accordance with one of the Claims 1 to 4, **characterised in that**,
the base (1) has a lower hinge bearing (6) that projects upward out of the plane of the base (1) and the receiving part (3) has an upper hinge bearing (8) that projects downward out the plane of the receiving part (3).

6. Mobile communication device with an adjustable mounting that has an optical sensor for an optical magnifying glass function on one side, the mounting of which has a receiving part (3) for the communication device and a spacer part (2), so that the receiving part (3) being positionable at a distance from and/or angle to a horizontal work surface, wherein the spacer part (2) being pivotably connected at one of its ends to the front or rear edge of the receiving part (3) and pivotably connected at its other end to the front or rear edge of a base (1), the front or edge of said base being parallel to the front or rear edge of the receiving part (3), wherein the length of the spacer part (2) is chosen such that the clear width of the space between the support points (6, 8) thereof to the pivotable connection to the base (1) and the receiving part (3) is somewhat larger than the length of the side edge connecting the front and rear edge of the receiving part (3),
**characterised in that**,
the spacer part (2), starting asymmetrically to one side from the side edge of the receiving part (3) opposite the optical sensor (5) of the communication device (4) and the side edge of the base (1) located beneath it, is arranged to extend in the direction of the middle of the receiving part (3) and the base (1).

7. Mobile communication device in accordance with Claim 6,
**characterised in that**,
in the area of the optical sensor (5) of the mobile communication device (4), a deflecting mirror (18) is arranged on the housing of the mobile communication device (4).

8. Mobile communication device in accordance with Claim 6,
**characterised in that**,
in the area of the optical sensor (5) of the mobile communication device (4), a spotting scope mounting (19) for a spotting scope (20) is arranged on the housing of the mobile communication device (4).

## Revendications

1. Support réglable pour appareils de communication mobiles avec capteur optique, se composant
- d'une plaque d'assise (1) positionnable sur une surface de travail, laquelle présente un bord avant, un bord arrière et deux bords latéraux reliant ces derniers,
- d'une partie réceptrice (3) pour l'appareil de communication (4), disposée au-dessus de la plaque d'assise (1), la partie réceptrice (3) présentant au moins un bord avant et/ou bord arrière parallèle au bord avant et/ou bord arrière de la plaque d'assise (1), ainsi que deux bords latéraux reliant ces bords avant et arrière, et
- d'une pièce d'écartement (2) supportant la partie réceptrice (3) et la plaque d'assise (1) à une distance variable et/ou en angle l'une par rapport à l'autre, laquelle est reliée par pivotement, respectivement à l'un des bords avant ou arrière de la plaque d'assise (1) et de la partie réceptrice (3), parallèles l'un à l'autre, avec la plaque d'assise (1) et la partie réceptrice (3),
la longueur de la pièce d'écartement (2) étant choisie de telle sorte que la largeur intérieure de l'espacement entre ses points d'appui (6, 8) pour une liaison pivotante avec la plaque d'assise (1) et la partie réceptrice (3) soit un peu plus grande que la longueur du bord latéral de la partie réceptrice (3), reliant le bord avant et le bord arrière,
**caractérisé en ce**
- **que** la pièce d'écartement (2) est disposée, en s'étendant en direction du milieu de la partie réceptrice (3) et de la plaque d'assise (1), asymétriquement sur un côté, en partant de l'un des bords latéraux de la partie réceptrice (3) et du bord latéral de la plaque d'assise (1) se trouvant en dessous de celui-ci.

2. Support réglable conformément à la revendication 1,
**caractérisé en ce**
**que** la pièce d'écartement (2) se compose de deux appuis (10) qui sont espacés l'un de l'autre dans le sens de la largeur de la plaque d'assise (1) et de la partie réceptrice (3).

3. Support réglable conformément à la revendication 2,
**caractérisé en ce**
**que** les deux appuis (10) sont reliés par des moyens de stabilisation (11).

4. Support réglable conformément à la revendication 1, 2 ou 3,
**caractérisé en ce**
**que** la pièce d'écartement (2) est reliée en articulation avec le bord arrière de la plaque d'assise (1) et le bord avant de la partie réceptrice (3).

5. Support réglable conformément à l'une des revendications 1 à 4,
**caractérisé en ce**
**que** la plaque d'assise (1) présente un support articulé (6) inférieur, faisant saillie vers le haut depuis le plan de la plaque d'assise (1) et que la partie réceptrice (3) présente un support articulé (8) supérieur, faisant saillie vers le bas depuis le plan de la partie réceptrice (3).

6. Appareil de communication mobile avec un support réglable, lequel présente, sur un côté, un capteur optique pour une fonction de grossissement optique et dont le support présente une partie réceptrice (3) pour l'appareil de communication et une pièce d'écartement (2), de telle sorte que la partie réceptrice (3) soit positionnable à sa distance et/ou en angle par rapport à une surface de travail horizontale, la pièce d'écartement (2) étant reliée, à l'une de ses extrémités, par pivotement avec le bord avant ou arrière de la partie réceptrice (3) et, à son autre extrémité, par pivotement avec le bord avant ou arrière d'une plaque d'assise (1), parallèle au bord avant ou arrière de la partie réceptrice (3), la longueur de la pièce d'écartement (2) étant choisie de telle sorte que la largeur intérieure de l'espacement entre ses points d'appui (6, 8) pour une liaison pivotante avec la plaque d'assise (1) et la partie réceptrice (3) soit un peu plus grande que la longueur du bord latéral de la partie réceptrice (3), reliant le bord avant et le bord arrière,
**caractérisé en ce**
**que** la pièce d'écartement (2) est disposée, en s'étendant en direction du milieu de la partie réceptrice (3) et de la plaque d'assise (1), asymétriquement sur un côté, en partant du bord latéral de la partie réceptrice (3), opposé au capteur optique (5) de l'appareil de communication (4), et du bord latéral de la plaque d'assise (1) se trouvant en dessous de celui-ci.

7. Appareil de communication mobile conformément à la revendication 6, **caractérisé en ce**
**qu'**un miroir de renvoi (18) est placé sur le boîtier de l'appareil de communication mobile (4) dans la zone du capteur optique (5) de l'appareil de communication mobile (4).

8. Appareil de communication mobile conformément à la revendication 6, **caractérisé en ce**
**qu'**un support de longue-vue (19) pour une longue-vue (20) est placé sur le boîtier de l'appareil de communication mobile (4) dans la zone du capteur optique (5) de l'appareil de communication mobile (4).
